# DEMANDE DE BREVET EUROPEEN

(11) **EP 1 045 318 A1**
(43) Date de publication de la demande: **18.10.2000**
(21) Numéro de dépôt: 00400981.7
(22) Date de dépôt: 10.04.2000
(51) Int. Cl.: G06F 17/30

(54) **Serveur pour la recherche d'informations dans un réseau de bases de données**

(30) Priorité: 15.04.1999 FR 9904715
(71) Demandeur: ALCATEL, 75008 Paris (FR)
(72) Inventeur: Mahiddini, Patrice, 92700 Colombes (FR); Levallet, Christophe, 92300 Levallois-Perret (FR)
(74) Mandataire: Smith, Bradford Lee

(57) **Abrégé**

L'invention est relative à un serveur (22) destiné à faciliter la recherche d'informations dans un réseau de bases de données, tel que le réseau Internet, ce serveur comportant une base de données contenant les adresses des bases de données du réseau et une indication sur les contenus de ces bases.

Le serveur comprend des moyens (24) à mémoire pour stocker des données caractéristiques des utilisateurs. Ces données sont, pour chaque utilisateur, sélectionnées dans le groupe comprenant au moins l'une des caractéristiques suivantes : le lieu d'habitation ou de travail, l'âge, le sexe, l'adresse, les centres d'intérêts, des données de personnalité, sa capacité à utiliser des outils informatiques, et les caractéristiques de son matériel. Des moyens (32, 34, 36, 40, 42, 44) sont prévus pour sélectionner, en fonction des caractéristiques de l'utilisateur, les adresses de bases de données à fournir à l'utilisateur et/ou la présentation de la sélection.

## Description

L'invention est relative à un serveur pour la recherche d'informations sur un réseau de bases de données, notamment du type Internet.

Quand un utilisateur ne connaît pas l'adresse d'un serveur distant d'une base de données pouvant contenir l'information dont il a besoin, la recherche d'une telle adresse constitue une opération souvent ressentie comme étant complexe. A cet effet, l'utilisateur se connecte à une base de données spécialisée appelée "moteur de recherche" et formule une requête sous forme de mots-clés et d'opérateurs logiques tels que des "ET" et des "OU". L'élaboration d'une telle requête implique un apprentissage dissuasif pour un grand nombre d'utilisateurs.

Il existe aussi des serveurs spécialisés fournissant des listes d'adresses organisées comme un annuaire imprimé. Mais les serveurs de ce type sont difficiles à localiser et ne sont pas toujours d'un emploi aisé.

Par ailleurs, les serveurs de navigation, constituant ou non des "moteurs de recherche", fournissent des réponses sous forme de pages affichées sur un écran qui ont des présentations standardisées et qui ne conviennent donc pas forcément à tous les utilisateurs.

En outre, dans les serveurs classiques, les résultats de recherche sont traités par une interface CGI ("Common Gateway Interface") qui ne présente pas toutes les garanties de confidentialité des communications et qui est aisément saturable quand une pluralité d'utilisateurs sont connectés.

L'invention remédie aux inconvénients mentionnés ci-dessus.

Elle concerne un serveur qui est caractérisé en ce qu'il comporte des moyens à mémoire pour stocker des informations relatives aux utilisateurs et aux bases de données du réseau, des moyens pour recevoir une requête de recherche d'informations sur une base de données du réseau et des moyens pour élaborer une réponse, sous forme d'une interface utilisateur, en fonction des caractéristiques de l'interrogateur.

Ainsi, la sélection des bases de données et/ou les caractéristiques de l'interface utilisateur tiennent compte des particularités de ce dernier, ce qui permet une utilisation plus aisée. En particulier, la personnalisation de l'interface utilisateur facilite l'utilisation, par exemple du fait que cette interface est adaptée aux périphériques et à l'ordinateur dont il dispose et du fait que la réponse proposée limite le nombre de serveurs à ceux contenant l'information adaptée à l'abonné. Ainsi, dans le cas où l'utilisateur recherche un article à acquérir, la réponse pourra être limitée aux serveurs des vendeurs proches de son domicile.

Cette facilité d'utilisation peut se traduire aussi par une simplification de la requête d'origine adressée vers le serveur car ce dernier pouvant limiter le champ de la recherche en fonction des caractéristiques de l'utilisateur, celui-ci pourra limiter le nombre de mots-clés qu'il doit envoyer ou utiliser des éléments graphiques ou textuels représentant l'information recherchée. Par exemple, l'utilisateur dispose, sur son application, d'un premier ensemble d'éléments graphiques avec lesquels il démarre la recherche et, en réponse à cette première étape, le serveur lui renvoie d'autres éléments graphiques, de préférence personnalisés, lui permettant d'affiner la recherche.

Les caractéristiques de l'utilisateur pouvant être introduites dans la mémoire du serveur concernent, par exemple, son lieu d'habitation, son âge, son sexe, ses goûts, sa capacité à utiliser les outils de navigation ou, de façon plus générale, les outils informatiques et l'équipement dont il dispose.

Ainsi, pour une même interrogation, la sélection de données et la présentation pourront être sensiblement différentes selon que l'utilisateur est une enfant de douze ans ou un adulte.

La sélection et la présentation pourront aussi varier en fonction des outils dont dispose l'utilisateur, c'est-à-dire, notamment, en fonction de la fréquence de travail du microprocesseur, des caractéristiques d'écran, de l'interface graphique, de l'interface audio, etc.

Dans un mode de réalisation, les caractéristiques de l'utilisateur sont mises à jour périodiquement dans la mémoire du serveur en tenant compte des requêtes de recherche adressées au serveur entre deux mises à jour.

Dans le mode de réalisation préféré de l'invention, l'accès au moyen à mémoire et au moyen générateur de réponse sous forme d'interface utilisateur s'effectue par l'intermédiaire de la combinaison d'un programme serveur répartiteur, ou séquenceur, de tâches ou de traitement ("multithread") qui alloue une tâche (thread) à chacun des utilisateurs qui envoie une requête. Ainsi on peut satisfaire de façon pratiquement simultanée une pluralité d'utilisateurs sans avoir à multiplier le nombre de programmes serveurs, contrairement à l'interface CGI qui nécessite une multiplication du nombre de lancements de programmes principaux. Autrement dit un programme serveur "multithread" du type de celui utilisé dans ce mode de réalisation est constamment à l'écoute des requêtes et n'a pas besoin d'être relancé à l'arrivée de nouvelles requêtes ; il garde donc un espace mémoire limité alors qu'avec une interface CGI, il faut, à chaque requête, attribuer un nouvel espace mémoire.

L'invention n'est pas liée à une technologie particulière d'accès au réseau ou à une technologie particulière de serveur. Toutefois, son implantation est facilitée dans un système de télécommunications pour lequel il est prévu une station de gestion des abonnés. En effet, dans ce cas, la station de gestion comporte une mémoire contenant des caractéristiques des abonnés et ces dernières peuvent être utilisées dans le serveur conforme à l'invention.

Un réseau de ce type est, par exemple, celui dans lequel les télécommunications s'effectuent par l'intermédiaire de satellites à orbites basses ou moyennes, le domaine de couverture étant séparé en zones terrestres ayant un rayon de plusieurs centaines de kilomètres. Dans ce réseau, chaque abonné établit une communication avec le réseau par l'intermédiaire d'une station de gestion et les communications entre un abonné du réseau et la station de gestion s'effectuent par l'intermédiaire de moyens de réception et de réémission à bord d'un satellite.

La présente invention est relative à un serveur destiné à faciliter la recherche d'informations dans un réseau de bases de données, tel que le réseau Internet, ce serveur comportant une base de données contenant les adresses des bases de données du réseau et une indication sur les contenus de ces bases. Ce serveur comprend des moyens à mémoire pour stocker des données caractéristiques des utilisateurs, ces données étant sélectionnées, pour chaque utilisateur, dans le groupe comprenant au moins l'une des caractéristiques suivantes : le lieu d'habitation ou de travail, l'âge, le sexe, l'adresse, les centres d'intérêts, des données de personnalité, sa capacité à utiliser des outils informatiques, et les caractéristiques de son matériel. Des moyens sont prévus pour sélectionner, en fonction des caractéristiques de l'utilisateur, les adresses de bases de données à fournir à cet utilisateur et/ou la présentation de la sélection.

Selon un mode de réalisation, les requêtes transmises par l'utilisateur sont interprétées par un traducteur avant d'être communiquées à la base de données.

Le serveur comporte un générateur d'objets ou applications, notamment du type multimédia intelligent, à transmettre à l'utilisateur et paramètrés, soit pour donner accès à une adresse particulière, soit pour générer une requête particulière dans la base de données.

Des objets multimédia intelligents sont, notamment, des petits programmes interprétables par une machine virtuelle, tel que des programmes connus sous la dénomination JAVA, JAVASCRIPT ou VBSCRIPT.

Selon un mode de réalisation, les objets ou applications à transmettre à l'utilisateur sont choisis dans le groupe comprenant : des icônes, des objets animés, des textes, du son et des images en trois dimensions.

Selon un mode de réalisation, le serveur comporte une mémoire pour stocker, au moins de façon temporaire, les données sélectionnées fournies à l'utilisateur et pour transmettre l'adresse, dans cette mémoire de données sélectionnées, des données transmises à l'utilisateur.

Dans une réalisation, le serveur comporte un traducteur lexical pour transformer en requêtes interprétables les requêtes fournies en langage naturel.

Le serveur comprend, de préférence, des moyens pour que les données sélectionnées communiquées à l'utilisateur soient sous forme d'une interface utilisateur.

Le serveur comporte, dans un exemple, une connexion à un centre de gestion d'abonnés d'un réseau de télécommunications, cette connexion permettant de remplir les moyens à mémoire qui stockent les données caractéristiques d'utilisateurs.

Le serveur peut comporter un moyen pour mettre à jour les caractéristiques d'utilisateurs en fonction des requêtes de recherches reçues précédemment de cet utilisateur.

Dans une réalisation le serveur comprend un moyen constamment en veille pour recevoir les requêtes des utilisateurs et activer un moyen répartiteur de requêtes.

D'autres caractéristiques et avantages de l'invention apparaîtront avec la description de certains de ses modes de réalisation, celle-ci étant effectuée en se référant aux dessins ci-annexés sur lesquels :
La figure 1 est une vue simplifiée d'un réseau de bases de données et d'utilisateurs avec un serveur conforme à l'invention,
La figure 2 est un schéma d'un serveur conforme à l'invention relié à un terminal d'abonné, et
La figure 3 est une vue analogue à celle de la fig. 2, mais pour une variante.

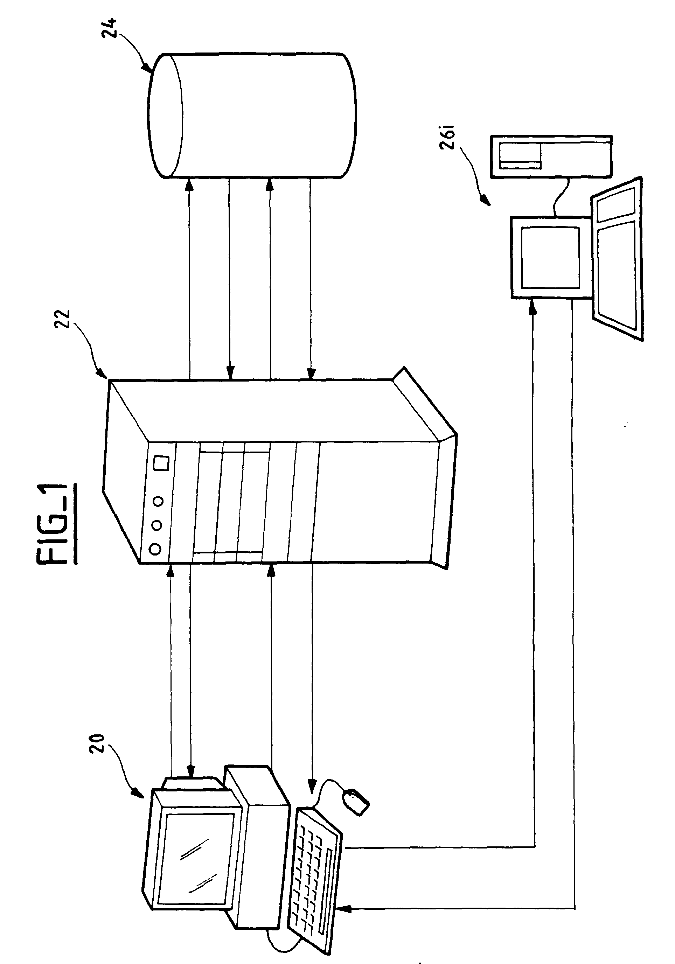

La figure 1 est une vue simplifiée d'ensemble d'un système et d'un procédé conformes à l'invention montrant un équipement 20 d'abonné, un serveur 22 avec une base de données 24 conforme à l'invention et un serveur 26ᵢ à base de données distante faisant partie d'une pluralité de tels serveurs.

Chaque utilisateur qui recherche une information active une interface multimédia de son programme client qui se charge de transmettre une requête au serveur 22 dans lequel se trouve la base de données 24 contenant des informations relatives aux serveurs distants 26₁, 26₂,...26ᵢ...du réseau. Conformément à l'invention, la base de données 24 contient des informations se rapportant aux utilisateurs et à leurs équipements 20.

Le serveur 22 a, dans cet exemple, une double fonction. La première fonction consiste à aider l'utilisateur, par des moyens graphiques personnalisés, à affiner sa recherche de façon que le système élabore un ensemble de requêtes de plus en plus précises. L'utilisateur a toutefois la possibilité d'envoyer des requêtes en langage naturel. Cette première fonction constitue la phase de navigation proprement dite. La seconde fonction consiste à fournir une liste de serveurs, ou services, qui est établie en tenant compte des caractéristiques de l'utilisateur qui sont conservées en mémoire de la base de données 24.

Chacune de ces fonctions est réalisée en transmettant, sous forme d'une interface utilisateur, au client 20 des données sous forme personnalisée, ces données étant, par exemple, des icônes, du son, du texte, des images animées ou des objets graphiques intelligents.

L'interface utilisateur fournit ainsi une liste de services présentée sous un format qui permet, de façon classique, un accès aisé aux services 26ᵢ, par le simple actionnement d'une interface physique, telle qu'une souris.

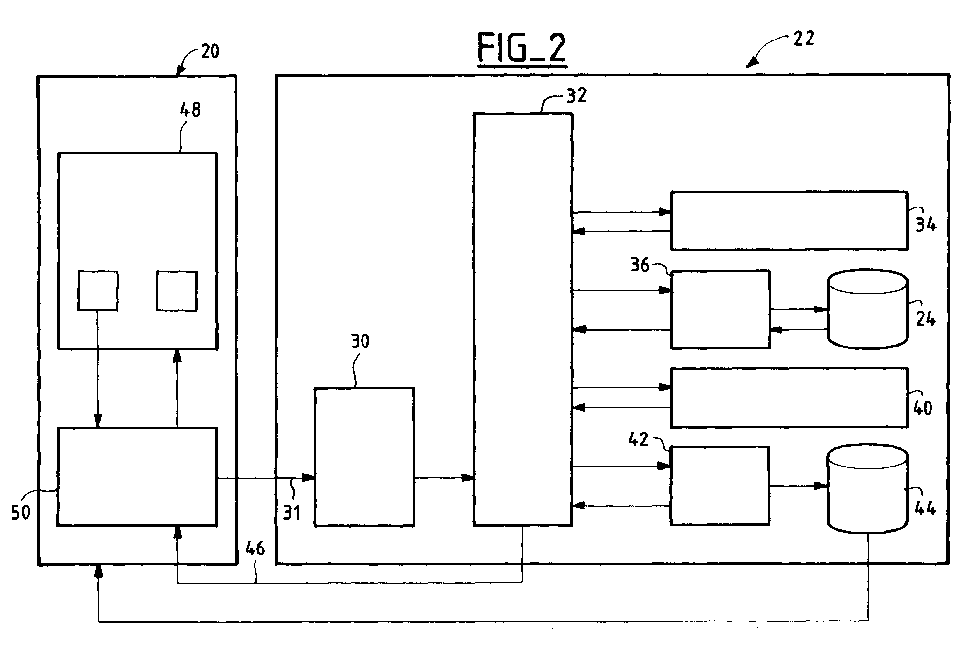

La figure 2 illustre un mode de réalisation de serveur 22 et des moyens à installer, ou à charger en ligne, en temps réel, sur le poste client de l'utilisateur.

Dans le serveur 22, l'ensemble des moyens ou fonctions est, pour l'essentiel, réalisé sous forme de programmes.

Le serveur comporte, à son entrée, un programme 30 connectable à l'ensemble des utilisateurs. Ce programme 30, qui est constamment en veille, reçoit les données de requête 31 fournies par les programmes clients des utilisateurs. Ces données contiennent une identification de chaque utilisateur. Le programme 30 est un programme serveur de type "multithread" qui n'a pas besoin d'être relancé à chaque requête d'utilisateur et qui limite donc l'occupation de la mémoire. Un programme de type multithread est par exemple décrit dans l'ouvrage intitulé "Le grand livre Windows NT4".

A la réception d'un nouveau message, le programme d'entrée 30 provoque l'activation (dit nouveau "thread") d'un programme répartiteur 32 et lui fournit les données reçues. Ce programme répartiteur 32 transmet, tout d'abord, les requêtes à un traducteur 34 qui transforme la requête associée à un objet graphique, ou exprimée en langage naturel, par l'utilisateur, en un langage interprétable par les autres applications ou programmes du serveur.

Le traducteur 34 retourne la requête traduite au répartiteur 32 et ce dernier transmet la requête ainsi traduite à la base de données 24 par l'intermédiaire d'une interface 36 de base de données.

La base de données 24 contient, d'une part, de façon classique, une liste des serveurs 26ᵢ disponibles sur le réseau avec l'adresse des informations qu'ils peuvent fournir et, d'autre part, selon l'invention, des données relatives aux utilisateurs. On rappelle ici que l'adresse fournie est sous forme d'une adresse unique qui comprend, d'une part, l'adresse du serveur et, d'autre part, l'adresse de l'information sélectionnée dans le serveur. Les données d'utilisateurs concernent tant leur personnalité et leurs habitudes, que leur matériel et leur domicile.

Les données d'utilisateurs sont préchargées ou sont fournies en ligne. Elles concernent, par exemple, l'âge, le sexe, les centres d'intérêts et les habitudes. Les données relatives aux matériels dont dispose l'utilisateur consistent, par exemple, en une description complète du matériel en sa possession telle que les caractéristiques de son ordinateur et la liste des équipements périphériques avec, aussi, leurs particularités (type d'imprimante, type d'écran, etc.).

A partir de la requête fournie par l'interface 36 et des données contenues en mémoire, la base 24 sélectionne les éléments qui devront être communiqués à l'utilisateur, c'est-à-dire les services 26ᵢ auxquels il peut se connecter. La base 24 fournit aussi des indications relatives à la présentation sélectionnée en fonction des caractéristiques de l'utilisateur. Il peut s'agir soit des caractéristiques de l'utilisateur qui sont retransmises au répartiteur 32 par l'intermédiaire du programme interface 36, soit d'une présélection d'interface utilisateur.

Par "présélection" d'interface utilisateur, on entend une description des interfaces qui devront être fournies à l'utilisateur. Cette description est communiquée, par l'intermédiaire de l'interface 36, au répartiteur 32.

Quel que soit le mode de réalisation, le répartiteur 32 fournit la liste des caractéristiques de l'utilisateur, ou la description de l'interface, à un générateur 40 d'applications ou d'objets destiné(es) à être téléchargé(es) vers l'utilisateur. Ce générateur 40 comporte une bibliothèque d'objets et/ou d'applications et des moyens pour combiner ces objets ou applications avec les adresses de services fournies par la base 24.

Ces objets ou applications peuvent se présenter de diverses manières telles que des icônes, des objets animés, notamment ceux connus sous la dénomination "applet Java", programme ActiveX, ou Script, tels que Javascript, et Vbscript, du texte, du son, des images vidéo, etc. Ces objets ou applications sont transmis au répartiteur 32 avec, bien entendu, l'adresse de l'utilisateur.

Le répartiteur 32 transmet ainsi les objets synthétisés par le générateur 40 vers un programme 42 de construction d'interface utilisateur. Cette dernière interface est stockée dans une mémoire 44 et à une adresse qui est communiquée, par une sortie 46, à l'utilisateur 20. L'adresse de l'interface dans la mémoire 44 est transmise sur la sortie 46 par l'intermédiaire de l'interface 42 et du répartiteur 32. L'interface utilisateur, c'est-à-dire les objets produits par le générateur 40 et assemblés par le programme 42, sont transmis, c'est-à-dire téléchargés, directement de la mémoire 44 vers l'utilisateur 20. L'adresse dans la mémoire 44 est transmise d'une façon différente de la transmission de l'interface utilisateur, car le logiciel de l'utilisateur, par exemple un navigateur "Netscape" ou "Microsoft", est piloté par une applet JAVA qui peut seulement provoquer le téléchargement d'une page à une adresse donnée. Ainsi, plutôt que de charger la page chez l'utilisateur, avec tout le contenu, ce qui augmenterait la charge du répartiteur 32 et complexifierait l'"applet" cliente, on délègue le transfert de fichiers au serveur HTTP (non représenté) classique afin que le répartiteur libère la mémoire plus tôt.

L'interface se traduit chez le client 20 par une image écran particulière.

Cette interface utilisateur n'est pas stockée en permanence dans la mémoire 44 mais est effacée après la fin de la communication entre le serveur 22 et le client concerné 20.

Les donnés contenues dans l'interface utilisateur permettent à ce dernier, soit de se connecter aux services 26ᵢ, sélectionnés par le serveur, soit d'exécuter d'autres requêtes provoquant l'affichage de nouvelles interfaces, remplies d'objets graphiques plus en rapport avec la recherche.

Ainsi, l'utilisateur voit sur son écran et/ou entend sur son interface audio des données ayant une présentation qui sont adaptées à sa personnalité, à ses besoins, à ses habitudes, à l'adresse de son domicile ou de son lieu de travail.

Les moyens se trouvant chez l'utilisateur et destinés à recevoir l'interface (programme) reçue du serveur 22 sont symbolisés par le bloc 48. Ses moyens de communication avec le réseau et le serveur sont représentés par le bloc 50 qui comprend le navigateur.

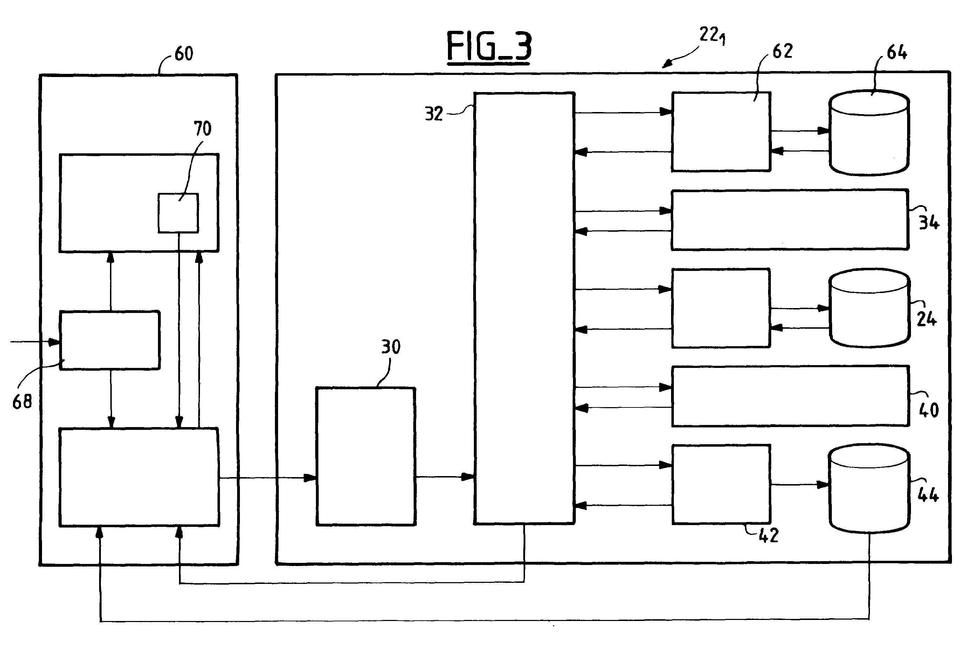

Dans le mode de réalisation de l'invention représenté sur la fig. 3, le serveur 22₁ est analogue au serveur 22 représenté sur la fig. 2 mais il s'en distingue par le fait que le traducteur 34 est précédé par un traducteur lexical 62. En effet, le traducteur 34 transforme simplement en langage programme les données qui lui sont communiquées tandis que le traducteur lexical 62 permet que les données fournies au traducteur 34 soient compréhensibles par ce dernier. En d'autres termes, le traducteur lexical 62 comporte un dictionnaire se trouvant dans une mémoire 64 pour interpréter les termes qui lui sont communiqués afin qu'ils soient interprétables, sans ambiguïté, par le traducteur 34.

Par ailleurs, dans l'exemple représenté sur cette figure 3, afin de mieux faire apparaître les possibilités de diversité des ressources chez les utilisateurs, on a montré que ce dernier comporte un analyseur vocal 68 permettant, en même temps qu'un clavier 70, de fournir des informations de requête vers le programme d'écoute 30.

## Revendications

1. Serveur (22) destiné à faciliter la recherche d'informations dans un réseau de bases de données (26ᵢ), tel que le réseau Internet, ce serveur comportant une base de données contenant les adresses des bases de données du réseau et une indication sur les contenus de ces bases, comprenant des moyens (24) à mémoire pour stocker des données caractéristiques des utilisateurs, ces données étant sélectionnées, pour chaque utilisateur, dans le groupe comprenant au moins l'une des caractéristiques suivantes : le lieu d'habitation ou de travail, l'âge, le sexe, l'adresse, les centres d'intérêts, des données de personnalité, sa capacité à utiliser des outils informatiques, et les caractéristiques de son matériel, caractérisé en ce que des moyens (32, 34, 36, 40, 42, 44) sont prévus pour sélectionner, en fonction des caractéristiques de cet utilisateur, les adresses de bases de données à fournir à cet utilisateur et la présentation de la sélection.

2. Serveur selon la revendication 1, caractérisé en ce que les requêtes transmises par l'utilisateur sont interprétées par un traducteur (34) avant d'être communiquées à la base de données (24).

3. Serveur selon la revendication 1 ou 2, caractérisé en ce qu'il comporte un générateur (40) d'objets ou applications, notamment du type multimédia intelligent, à transmettre à l'utilisateur et paramètrés, soit pour donner accès à une adresse particulière, soit pour générer une requête particulière dans la base de données (24).

4. Serveur selon la revendication 3, caractérisé en ce que les objets ou applications à transmettre à l'utilisateur sont choisis dans le groupe comprenant : des icônes, des objets animés, des textes, du son et des images en trois dimensions.

5. Serveur selon l'une quelconque des revendications précédentes, caractérisé en ce qu'il comporte une mémoire (44) pour stocker, au moins de façon temporaire, les données sélectionnées fournies à l'utilisateur et pour transmettre l'adresse, dans cette mémoire de données sélectionnées, des données transmises à l'utilisateur.

6. Serveur selon la revendication 2, caractérisé en ce qu'il comporte un traducteur lexical (62) pour transformer en requêtes interprétables les requêtes fournies en langage naturel.

7. Serveur selon l'une quelconque des revendications précédentes, caractérisé en ce qu'il comprend des moyens (24, 36, 40, 42) pour que les données sélectionnées communiquées à l'utilisateur soient sous forme d'une interface utilisateur.

8. Serveur selon l'une quelconque des revendications précédentes, caractérisé en ce qu'il comporte une connexion à un centre de gestion d'abonnés d'un réseau de télécommunications, cette connexion permettant de remplir les moyens à mémoire (24) qui stockent les données caractéristiques d'utilisateurs.

9. Serveur selon l'une quelconque des revendications précédentes, caractérisé en ce qu'il comporte un moyen pour mettre à jour les caractéristiques d'utilisateurs en fonction des requêtes de recherches reçues précédemment de cet utilisateur.

10. Serveur selon l'une quelconque des revendications précédentes caractérisé en ce qu'il comprend un moyen (30) constamment en veille pour recevoir les requêtes des utilisateurs et activer un moyen répartiteur (32) de requêtes.
